# EUROPEAN PATENT APPLICATION

(11) **EP 3 533 356 A1**
(43) Date of publication of application: **04.09.2019**
(21) Application number: 18199555.6
(22) Date of filing: 10.10.2018
(51) Int. Cl.: A45D 27/48

(54) **ELECTRIC SHAVER CLEANING SYSTEM**

(30) Priority: 13.10.2017 JP 2017199710
(71) Applicant: Maxell Izumi Co., Ltd., Nagano 399-8721 (JP)
(72) Inventor: TOMARU, Naoyuki, Matsumoto-shi, Nagano 399-8721 (JP)
(74) Representative: Mewburn Ellis LLP

(57) **Abstract**

There is provided an electric shaver cleaning apparatus having a structure for the degree of freedom in operation and the degree of freedom in design while enabling stable interactive communication between an electric shaver and a cleaning apparatus.

An electric shaver cleaning apparatus (40) has a power supply terminal (45) whose shape corresponds to a charging terminal (35) of an electric shaver (30), second communication means (20) whose system corresponds to first communication means (10) of the electric shaver (30), and a cleaning tank (41). In a state where a head unit (31) of the electric shaver (30) is accommodated in the cleaning tank (41), the second communication means (20) is located at a position where the second communication means (20) faces the first communication means (10). In a state where a charging terminal (35) and a power supply terminal (45) are connected to each other, the first communication means (10) and the second communication means (20) are configured to enable short-range wireless communication therebetween.

## Description

### Technical Field

The present invention relates to an electric shaver cleaning apparatus and an electric shaver cleaning system.

### Background Art

When in use, dirt such as clipped hairs and sebum adheres to an inner blade and an outer blade of a head unit of an electric shaver. Therefore, an electric shaver cleaning apparatus for cleaning and removing the dirt has been widely used.

With respect to the electric shaver cleaning apparatus in the related art, there is a known configuration in which wired communication means is provided and a terminal of the electric shaver and a terminal of the cleaning apparatus are brought into contact with each other so as to allow electrical connection and wired communication therebetween (PTL 1: JP-A-2013-230215 and PTL2: JP-A-2013-232321).

### Summary of Invention

### Technical Problem

According to the electric shaver cleaning apparatus in the related art as exemplified in PTL 1 and PTL 2, a signal line as well as a power line is disposed in a terminal of the electric shaver and a terminal of the cleaning apparatus. These terminals are brought into contact with each other for electrical connection therebetween so as to control a cleaning operation. According to this configuration, in a case of only one signal line, interactive communication is less likely to be realized. In a case of two or more signal lines, electrical conduction is less likely to be ensured. In view of the configuration which allows the electrical connection by bringing the terminals into contact with each other after disposing the signal line as well as the power line, there is a problem in that the degree of freedom in apparatus design is restricted. In addition, there is a similar problem in a configuration in which the terminal of the electric shaver and the terminal of the cleaning apparatus are connected using a connector.

### Solution to Problem

The present invention is made in view of the above-described circumstances, and an object thereof is to provide an electric shaver cleaning apparatus and an electric shaver cleaning system, which have a structure for the degree of freedom in operation and the degree of freedom in design while enabling stable interactive communication between an electric shaver and a cleaning apparatus.

As an embodiment, the above-described problems are solved by solving means described below.

According to the present invention, there is provided an electric shaver cleaning apparatus including a power supply terminal whose shape corresponds to a shape of a charging terminal of an electric shaver, second communication means whose communication method corresponds to a communication method of first communication means of the electric shaver, and a cleaning tank. In a state where a head unit of the electric shaver is accommodated in the cleaning tank, the second communication means is located at a position where the second communication means faces the first communication means. In a state where the charging terminal and the power supply terminal are connected to each other, the first communication means and the second communication means are configured to enable short-range wireless communication therebetween.

In addition, according to the present invention, there is provided an electric shaver cleaning system including an electric shaver that has a charging terminal and first communication means, and a cleaning apparatus that has a power supply terminal and second communication means. In a state where a head unit of the electric shaver is accommodated in a cleaning tank of the cleaning apparatus, the first communication means and the second communication means are respectively located at a position where both of these face each other. In a state where the charging terminal and the power supply terminal are connected to each other, the first communication means and the second communication means are configured to enable short-range wireless communication therebetween.

According to these configurations, in a state where the head unit of the electric shaver is accommodated in the cleaning tank of the cleaning apparatus, and the charging terminal and the power supply terminal are connected to each other, the first communication means and the second communication means face each other so as to enable the short-range wireless communication. Accordingly, the electric shaver and the cleaning apparatus can perform stabilized interactive communication by preventing external noise, thereby allowing the degree of freedom in operation. The electric shaver and the cleaning apparatus perform a predetermined operation by using the short-range wireless communication. Accordingly, wired connection is realized by using only two terminals for charging or power supply, thereby allowing the degree of freedom in design.

### Advantageous Effects of Invention

According to the present invention, in a state where the head unit of the electric shaver is accommodated in the cleaning tank of the cleaning apparatus, and the charging terminal and the power supply terminal are connected to each other, the first communication means and the second communication means face each other so as to enable the short-range wireless communication. Accordingly, the electric shaver and the cleaning apparatus can perform stabilized interactive communication by preventing external noise, thereby allowing the degree of freedom in operation. The electric shaver and the cleaning apparatus perform a predetermined operation by using the short-range wireless communication. Accordingly, wired connection is realized by using only two terminals for charging or power supply, thereby allowing the degree of freedom in design. As a result, for example, the cleaning apparatus can be operated in conjunction with the electric shaver, and the electric shaver can give a status notification to the cleaning apparatus. Therefore, the electric shaver cleaning apparatus and the electric shaver cleaning system are realized which are provided with multiple functions to automatically perform cleaning, drying, and charging. Brief Description of Drawings
Fig. 1 is a schematic perspective view illustrating an example of an electric shaver cleaning apparatus according to an embodiment of the present invention.
Fig. 2 is a front view of the electric shaver cleaning apparatus according to the above-described embodiment.
Fig. 3 is a sectional view taken along line III-III in Fig. 2, in which an internal structure is omitted.
Fig. 4 is a right side view of the electric shaver cleaning apparatus according to the above-described embodiment.
Fig. 5 is a rear view of the electric shaver cleaning apparatus according to the above-described embodiment.
Fig. 6 is a plan view of the electric shaver cleaning apparatus according to the above-described embodiment.
Fig. 7 is a schematic perspective view illustrating an example of a container configuring the electric shaver cleaning apparatus according to the above-described embodiment.
Fig. 8 is a perspective view of an electric shaver according to the above-described embodiment.
Fig. 9 is a schematic perspective view illustrating an example of an electric shaver cleaning system according to an embodiment of the present invention, and is a view illustrating a state in a former stage where a charging terminal and a power supply terminal are connected to each other in a state where a head unit of the electric shaver is accommodated in a cleaning tank.
Fig. 10 is a schematic perspective view illustrating an example of the electric shaver cleaning system according to the above-described embodiment, and is a view illustrating a state where the charging terminal and the power supply terminal are connected to each other in the state where the head unit of the electric shaver is accommodated in the cleaning tank.

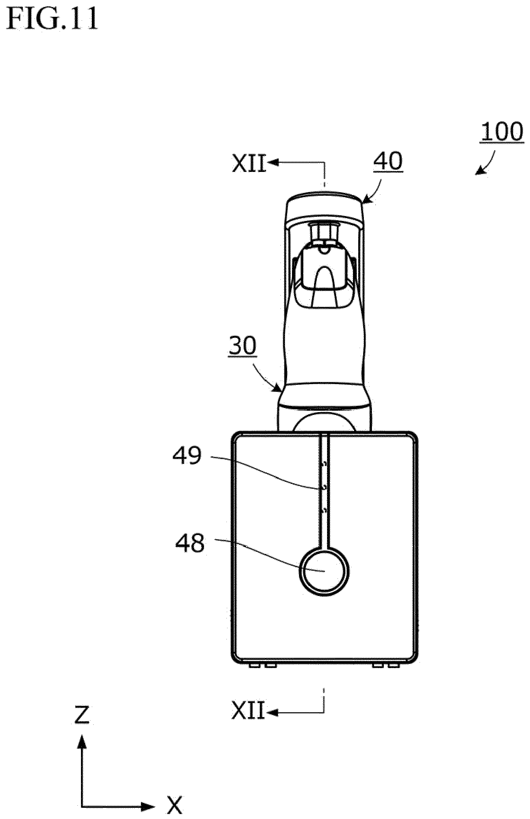

Fig. 11 is a front view of the electric shaver cleaning system according to the above-described embodiment.

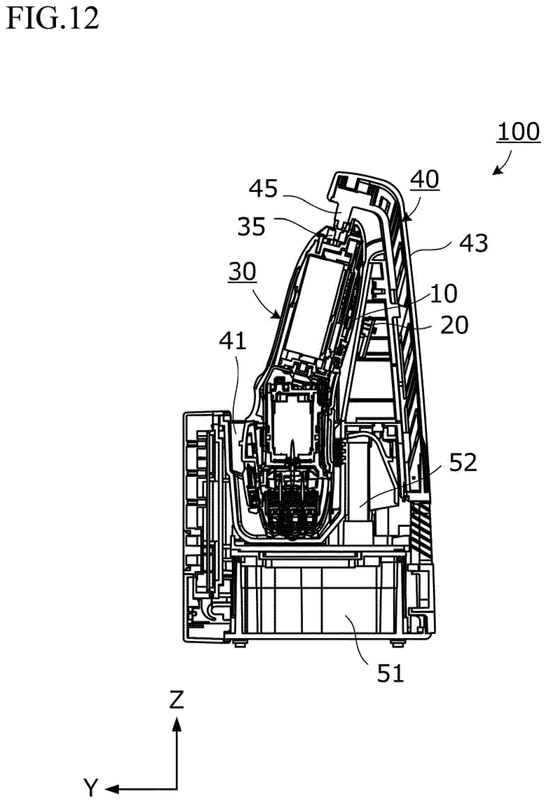

Fig. 12 is a sectional view taken along line XII-XII in Fig. 11, in which an internal structure is omitted.
Fig. 13 is a block configuration diagram illustrating an example of the electric shaver cleaning system according to the above-described embodiment.

### Description of Embodiments

Hereinafter, an embodiment according to the present invention will be described in detail with reference to the drawings. As an example, the present embodiment is applicable to an electric shaver cleaning apparatus 40. Hereinafter, in some cases, the electric shaver cleaning apparatus 40 may be simply referred to as a "cleaning apparatus". The cleaning apparatus 40 in combination with an electric shaver 30 configures an electric shaver cleaning system 100. Hereinafter, in some cases, the electric shaver cleaning system 100 may be simply referred to as a "cleaning system". In all of the drawings for describing the embodiment, the same reference numerals will be given to members having the same function, and repeated description thereof may be omitted in some cases.

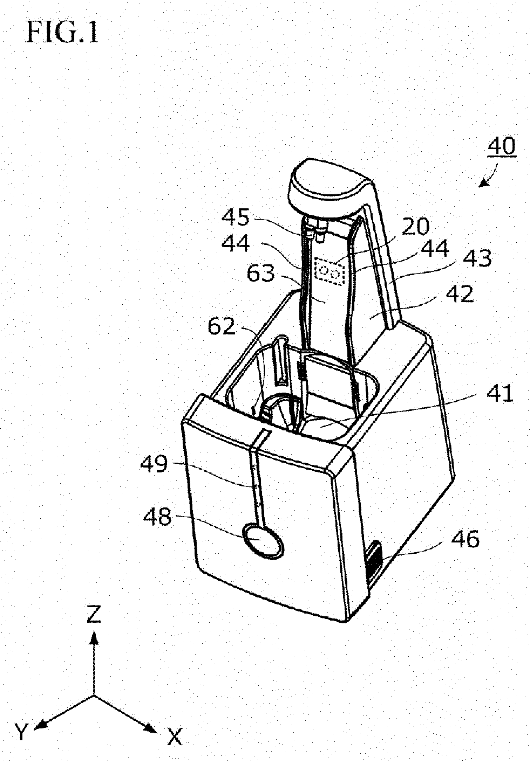

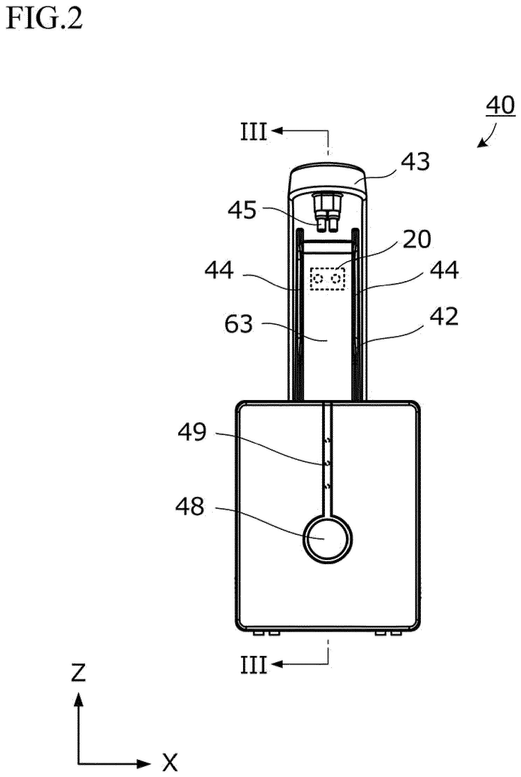

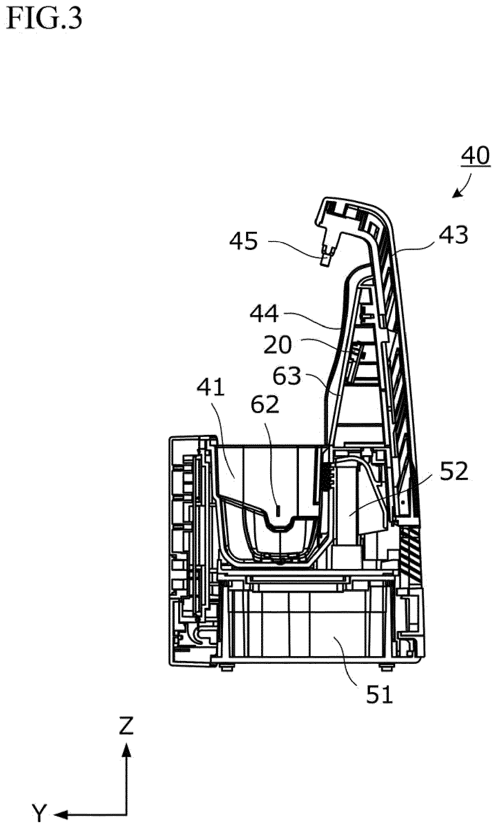

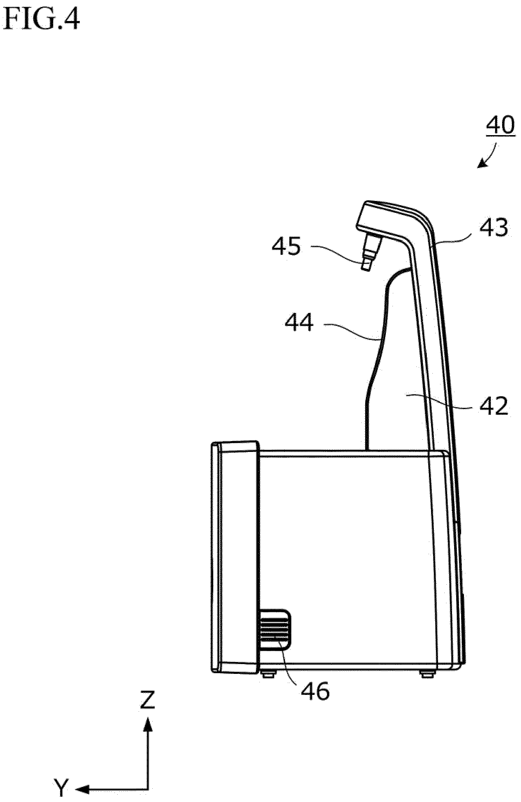

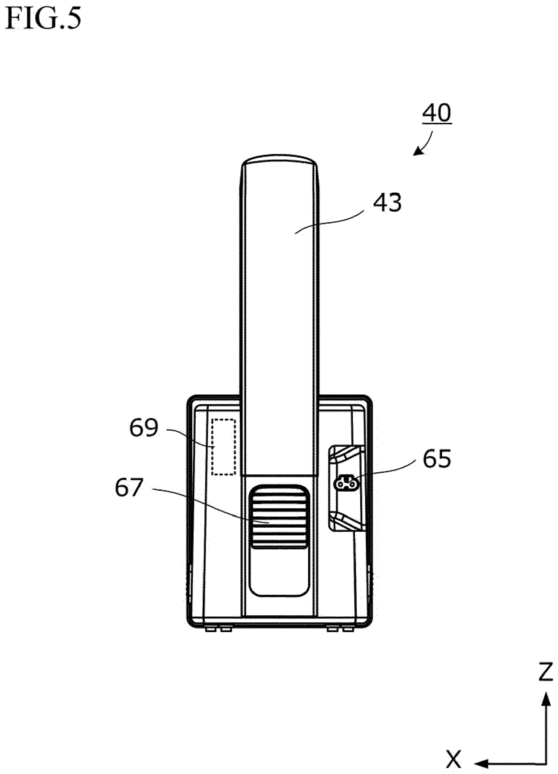

As illustrated in Figs. 1 to 6, as an example, the cleaning apparatus 40 includes a cleaning tank 41 and a pillar portion 42 located in a rear side upper portion of the cleaning tank 41. Here, In order to facilitate the description of a positional relationship of respective portions of the cleaning apparatus 40, directions in the drawing are respectively indicated by arrows X, Y, and Z.

A front side of the cleaning tank 41 serves as an operation panel, and a selection button 48 for selecting operations is located thereon. A plurality of LEDs 49 for displaying the operations are arranged above the selection button 48, and are incorporated in the operation panel.

A slide portion 43 which slides upward and downward is located on a rear surface side of the pillar portion 42, and a power supply terminal 45 is located on an upper side of the slide portion 43 so as to face downward.

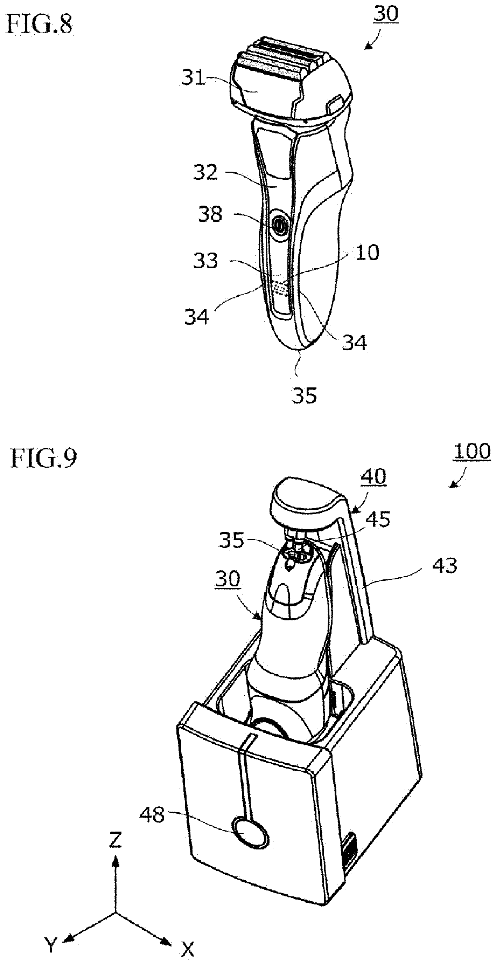

Here, as illustrated in Fig. 8, as an example, the electric shaver 30 includes a main body 32 to be gripped when in use, and a head unit 31 located in an upper portion of the main body 32. A power button 38 is located on a front surface side of the main body 32. A charging terminal 35 is located in a lower portion of the main body 32. Shapes of the charging terminal 35 and the power supply terminal 45 correspond to each other so that both of these can be connected to each other.

In the electric shaver 30, first communication means 10 is incorporated on the front surface side of the main body 32, at a position between the power button 38 and the charging terminal 35. As an example, a cover formed of a translucent resin is located on the front surface side of the first communication means 10, thereby configuring a transmission/reception surface 33 (refer to Fig. 8).

In the cleaning apparatus 40, second communication means 20 is incorporated on the front surface side of the pillar portion 42, at a position between the cleaning tank 41 and the power supply terminal 45. As an example, a cover formed of the translucent resin is located on the front surface side of the second communication means 20, thereby configuring a transmission/reception surface 63 (refer to Fig. 1).

The first communication means 10 and the second communication means 20 employ communication methods corresponding to each other. As the communication method of the first communication means 10 and the second communication means 20, a method of short-range wireless communication is employed. For example, an infrared communication method or a wireless personal area network (WPAN) may be employed.

The present embodiment employs the infrared communication method as the communication method of the first communication means 10 and the second communication means 20. According to this configuration, only a signal having an infrared wavelength is transmitted and received. Accordingly, both of these are not affected by an external radio wave.

In the present embodiment, the first communication means 10 has an infrared diode 11 and a phototransistor 12. The second communication means 20 has an infrared diode 21 and a phototransistor 22. According to this configuration, the infrared diode 11 and the phototransistor 22 are arranged to face each other, and the infrared diode 21 and the phototransistor 12 are arranged to face each other. In this manner, communication from the cleaning apparatus 40 to the electric shaver 30 and communication from the electric shaver 30 to the cleaning apparatus 40 can be independently controlled.

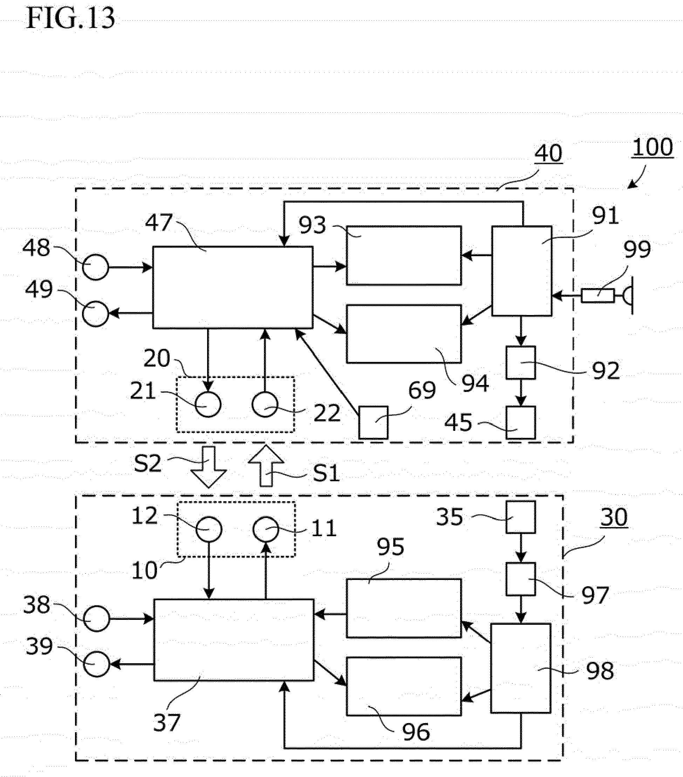

Fig. 13 is a block configuration diagram illustrating an example of a cleaning system 100 according to the present embodiment. A control operation of the cleaning system 100 according to the present embodiment will be described below with reference to the block configuration diagram in Fig. 13.

The electric shaver 30 includes the first communication means 10, the charging terminal 35, a power switching switch 97, a power circuit 98, a battery 95, a blade drive motor 96, a power button 38, an LED 39, and a first control circuit 37. If a power adapter 99 or the power supply terminal 45 is connected to the charging terminal 35, the power switching switch 97 is operated, and the power circuit 98 is operated so as to switch battery driving to external power supply driving.

The cleaning apparatus 40 includes the second communication means 20, the power supply terminal 45, a power supply switch 92, a power circuit 91, a pump drive motor 93, a fan drive motor 94, the selection button 48, an LED 49, a system switch 69, and a second control circuit 47. If a power adapter 99 is connected and the system switch 69 is operated, the power supply switch 92 is operated so as to operate the power circuit 91.

The first control circuit 37 performs information communication from the electric shaver 30 to the cleaning apparatus 40 by using a command signal binarized (0, 1) to the infrared diode 11 as a transmitting side and the phototransistor 12 as a receiving side, thereby causing the electric shaver 30 and the cleaning apparatus 40 to be operated in conjunction with each other. In addition, the second control circuit 47 performs information communication from the cleaning apparatus 40 to the electric shaver 30 by using a command signal binarized (0, 1) to the infrared diode 21 as a transmitting side and the phototransistor 22 as a receiving side, thereby causing the electric shaver 30 and the cleaning apparatus 40 to be operated in conjunction with each other. As an example, the infrared diode 11 (21) emits infrared light having a wavelength of 800 to 900 nm. If the phototransistor 12 (22) receives the light, the circuit is turned "ON". When the phototransistor 12 (22) does not receive the light, the circuit is turned "OFF". These "ON" and "OFF" are binarized (0, 1) so as to form the command signal.

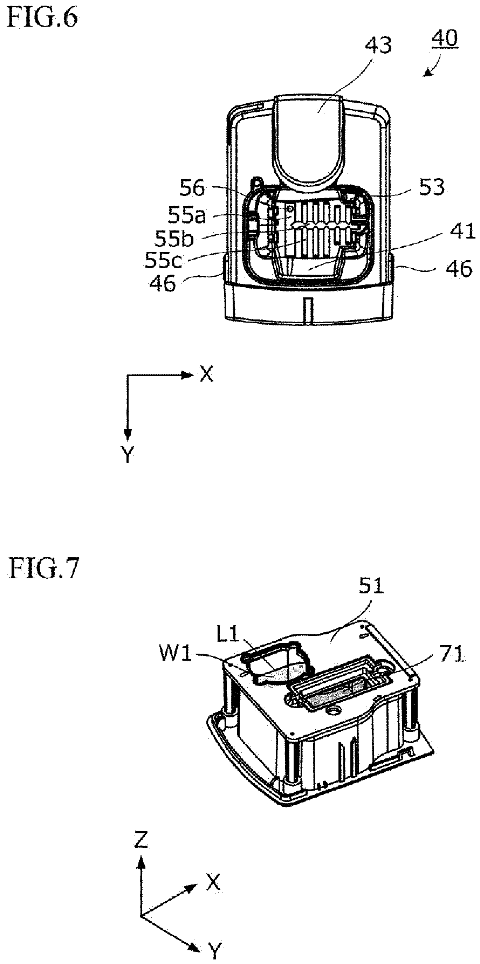

Fig. 7 is a schematic perspective view illustrating an example of a container 51 configuring the cleaning apparatus 40 according to the present embodiment. Preparation work for the cleaning apparatus 40 according to the present embodiment will be described below with reference to Figs. 1 and 7.

The tank 51 illustrated in Fig. 7 is exposed if the cleaning apparatus 40 is lifted while a container unloading button 46 laterally located on the lower side of the cleaning tank 41 of the cleaning apparatus 40 is pressed. After it is visually checked whether a filter 71 is not clogged, water is put into the container 51 so as to reach a water supply line L1. Next, an appropriate amount of detergent specified by a manufacturer is put into the water so as to be used as a cleaning solution W1. Thereafter, if the preparation work returns to the state illustrated in Fig. 1, the preparation work is completed.

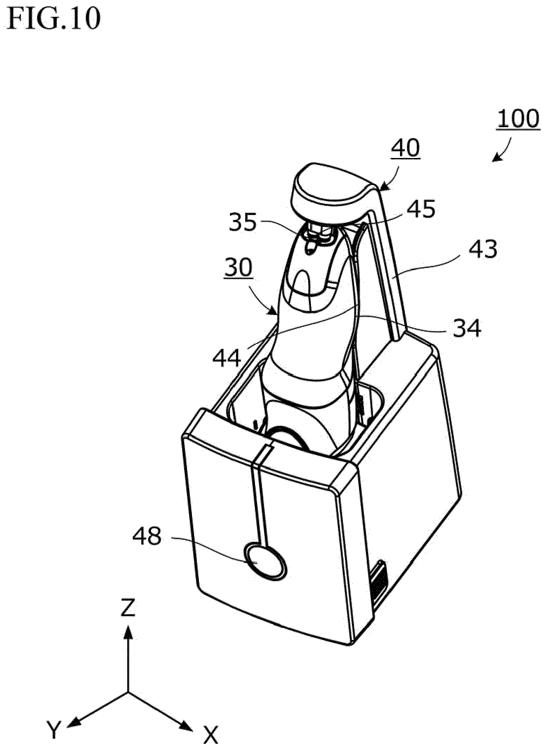

Figs. 9 and 10 are schematic perspective views illustrating an example of the electric shaver cleaning system 100 according to the present embodiment. Referring to Figs. 9 and 10, cleaning work of the electric shaver 30 which is carried out by the cleaning system 100 according to the present embodiment will be described below.

In a state where the preparation work of the cleaning apparatus 40 is completed, the slide portion 43 located on the rear surface side of the pillar portion 42 is slid in an upward direction. Next, while the electric shaver 30 is caused to adopt an inverted posture, the head unit 31 is accommodated in the cleaning tank 41 (refer to Fig. 9). Thereafter, in a state where the head unit 31 of the electric shaver 30 is accommodated in the cleaning tank 41, the slide portion 43 is slid in a downward direction so as to connect the charging terminal 35 and the power supply terminal 45 to each other (refer to Fig. 10). If the slide portion 43 is slid in the downward direction, the system switch 69 is operated.

If the charging terminal 35 and the power supply terminal 45 are connected to each other and the system switch 69 is operated, the short-range wireless communication starts between the first communication means 10 of the electric shaver 30 and the second communication means 20 of the cleaning apparatus 40, thereby forming a data link between the electric shaver 30 and the cleaning apparatus 40. Thereafter, the electric shaver 30 and the cleaning apparatus 40 are brought into a standby state. Three LEDs 49 scroll from below to above, and are turned off, thereby informing a user of the standby state. When the charging terminal 35 and the power supply terminal 45 are insufficiently connected to each other, all of the three LEDs 49 blink. Accordingly, the user restarts the work by causing the slide portion 43 to be slid in the upward direction.

Thereafter, the selection button 48 is pressed so as to select an operation course. In accordance with an input signal from the selection button 48, the second control circuit 47 sets a combination of a cleaning operation, a drying operation, and a charging operation. For example, as the operation course, a fully automated course for cleaning, drying, and charging, a course of drying and charging, and a course of charging only are selected.

During the interactive communication between the electric shaver 30 and the cleaning apparatus 40, as an example, a command signal for operating an inner blade is transmitted from the cleaning apparatus 40 to the electric shaver 30 so as to operate the electric shaver 30 for a predetermined time. Thereafter, an operation completion signal is transmitted from the electric shaver 30 to the cleaning apparatus 40. As an example, a signal of confirming the charging is transmitted from the cleaning apparatus 40 to the electric shaver 30, and a charging request signal is transmitted from the electric shaver 30 to the cleaning apparatus 40 so as to charge the electric shaver 30. Thereafter, a charge completion signal is transmitted from the electric shaver 30 to the cleaning apparatus 40.

During the cleaning operation, for example, the head unit 31 of the electric shaver 30 is operated for a predetermined time so as to actively sweep off dirt, such as clipped hairs and sebum, adhering to an inner blade and an outer blade. In this manner, the cleaning operation is promoted. Furthermore, a bottom portion of the cleaning tank 41 is subjected to emboss processing. Accordingly, the cleaning solution W1 is smoothly circulated by a reducing action of liquid surface tension, thereby improving a cleaning effect. In this invention, examples of the hair include beards, mustaches, whiskers, and the like.

As illustrated in Figs. 1, 8, and 10, according to the present embodiment, mutual shapes correspond to each other between a convex portion 34 on both sides of the transmission/reception surface 33 of the electric shaver 30 and a concave portion 44 on both sides of the transmission/reception surface 63 of the pillar portion 42 of the cleaning apparatus 40. In a state where the head unit 31 is accommodated in the cleaning tank 41, the convex portion 34 and the concave portion 44 are configured to overlap each other. According to this configuration, the first communication means 10 and the second communication means 20 are externally shielded by the convex portion 34 and the concave portion 44. Therefore, external noise can be effectively prevented.

According to the present embodiment, the electric shaver 30 and the cleaning apparatus 40 can perform the stabilized interactive communication by preventing the external noise, thereby allowing the degree of freedom in operation. The electric shaver 30 and the cleaning apparatus 40 perform a predetermined operation by using the short-range wireless communication. Accordingly, wired connection is realized by using only two terminals for charging or power supply, thereby allowing the degree of freedom in design. As a result, the cleaning apparatus 40 can be operated in conjunction with the electric shaver 30, and the electric shaver 30 can give a status notification to the cleaning apparatus 40. Therefore, the electric shaver cleaning system 100 is realized which is provided with multiple functions to automatically perform cleaning, drying, and charging.

## Claims

1. An electric shaver cleaning apparatus (40) comprising:
a power supply terminal (45) whose shape corresponds to a shape of a charging terminal (35) of an electric shaver (30);
second communication means (20) whose communication method corresponds to a communication method of first communication means (10) of the electric shaver (30); and
a cleaning tank (41),
wherein in a state where a head unit (31) of the electric shaver (30) is accommodated in the cleaning tank (41), the second communication means (20) is located at a position where the second communication means (20) faces the first communication means (10), and
wherein in a state where the charging terminal (35) and the power supply terminal (45) are connected to each other, the first communication means (10) and the second communication means (20) are configured to enable short-range wireless communication therebetween.

2. The electric shaver cleaning apparatus (40) according to claim 1,
wherein the second communication means (20) is incorporated in a pillar portion (42) located above the cleaning tank (41), and
wherein the second communication means (20) has an infrared diode and a phototransistor.

3. The electric shaver cleaning apparatus (40) according to claim 1 or 2, further comprising:
a container (51) that is located below the cleaning tank (41) so as to receive a cleaning solution; and
a pump (52) that circulates the cleaning solution inside the cleaning tank (41),
wherein a water port (53) connected to the pump (52) is formed at a predetermined position on a side surface of the cleaning tank (41),
wherein a bottom surface of the cleaning tank (41) has a plurality of drain grooves (55a, 55b, and 55c) connected to each other, and a drain port (56) connected to the drain grooves (55a, 55b, and 55c),
wherein in a state where the container (51) receives the cleaning solution, the drain port (56) and the pump (52) are connected to each other via the cleaning solution, and
wherein the drain grooves (55a, 55b, and 55c) are subjected to emboss processing.

4. An electric shaver cleaning system (100) comprising:
an electric shaver (30) that has a charging terminal (35) and first communication means (10); and
a cleaning apparatus (40) that has a power supply terminal (45) and second communication means (20),
wherein in a state where a head unit (31) of the electric shaver (30) is accommodated in a cleaning tank (41) of the cleaning apparatus (40), the first communication means (10) and the second communication means (20) are respectively located at a position where both of these face each other, and
wherein in a state where the charging terminal (35) and the power supply terminal (45) are connected to each other, the first communication means (10) and the second communication means (20) are configured to enable short-range wireless communication therebetween.

5. The electric shaver cleaning system (100) according to claim 4,
wherein the first communication means (10) is incorporated in a main body (32) of the electric shaver (30),
wherein the second communication means (20) is incorporated in a pillar portion (42) located above the cleaning tank (41), and
wherein the first communication means (10) and the second communication means (20) respectively have an infrared diode and a phototransistor.

6. The electric shaver cleaning system (100) according to claim 5,
wherein mutual shapes correspond to each other between a convex portion (34) on both sides of an oscillating/receiving surface of the main body (32) and a concave portion (44) on both sides of an oscillating/receiving surface of the pillar portion (42), and
wherein in a state where the head unit (31) is accommodated in the cleaning tank (41), the convex portion (34) and the concave portion (44) are configured to overlap each other.

7. The electric shaver cleaning system (100) according to claim 5 or 6,
wherein a slide portion (43) which slides upward and downward is located on a rear surface side of the pillar portion (42), and the power supply terminal (45) is located on an upper side of the slide portion (43) so as to face downward, and
wherein in a state where the charging terminal (35) and the power supply terminal (45) are connected to each other, the electric shaver (30) and the cleaning tank (41) are configured to be in synchronization with each other.

8. The electric shaver cleaning system (100) according to any one of claims 4 to 7,
wherein a control circuit (47) is incorporated in the cleaning apparatus (40), a selection button (48) is located on a front surface side of the cleaning tank (41), and the control circuit (47) is configured to set a combination of a cleaning operation, a drying operation, and a charging operation by receiving an input signal from the selection button (48).
